## Europäisches Patentamt
## European Patent Office
## Office européen des brevets

(19)

(11) Numéro de publication: **0 196 985**
**B1**

(12)

# FASCICULE DE BREVET EUROPEEN

(45) Date de publication du fascicule du brevet:
**01.06.88**

(51) Int. Cl.⁴: **C 22 C 21/06**, C 22 C 21/08,
**G 11 B 5/64**

(21) Numéro de dépôt: **86420070.4**

(22) Date de dépôt: **11.03.86**

(54) **Alliage à base d'al pour substrat de disques ordinateurs.**

(30) Priorité: **12.03.85 FR 8504064**

(43) Date de publication de la demande:
**08.10.86 Bulletin 86/41**

(45) Mention de la délivrance du brevet:
**01.06.88 Bulletin 88/22**

(84) Etats contractants désignés:
**BE CH DE GB IT LI LU NL**

(56) Documents cités:
**DE - B - 1 145 801**
**GB - A - 2 071 145**
**GB - A - 2 090 289**
**US - A - 2 841 512**

**ALUMINUM, vol. 1, Properties, Physical Metallurgy and Phase Diagrams, American Society for Metals, page 205, Ohio, US**

(73) Titulaire: **CEGEDUR SOCIETE DE TRANSFORMATION DE L'ALUMINIUM PECHINEY, 23, Rue Balzac, F-75008 Paris (FR)**

(72) Inventeur: **Constant, Didier, C6 Bois Fleuri Rocheplaine, F-38120 Saint-Egreve (FR)**

(74) Mandataire: **Séraphin, Léon et al, PECHINEY 28, rue de Bonnel, F-69433 Lyon Cedex 3 (FR)**

## Description

L'invention concerne un alliage à base d'Al du type 5000 ou 6000 selon la nomenclature de l'Aluminium Association utilisé pour la fabrication de substrats de disques d'ordinateurs.

Le problème que se propose de résoudre l'invention est l'obtention d'un alliage contenant une dispersion fine et homogène de précipités intermétalliques, en particulier ceux contenant du Fe.

On sait que la présence de tels constituants grossiers nuit soit à la qualité de surfaces géométriques du substrat (rugosité), soit à la qualité du revêtement magnétique support d'information (voir par exemple FR 2 496 702).

Lors d'essais, il a été constaté que l'addition de Sr est peu efficace et donne des résultats aléatoires pour l'affinage de ces précipités primaires (obtenus lors de la solidification). D'autres additions ont été alors recherchées et le Be s'est révélé particulièrement bénéfique, pour des teneurs comprises entre 150 et 2000 ppm.

Au-dessous de 100 ppm, l'affinage obtenu est pratiquement nul par rapport à un témoin sans addition de Be. Pour 2000 ppm, l'effet est très marqué mais évolue faiblement pour des additions plus importantes; l'addition est alors limitée à cette dernière valeur pour des raisons économiques.

L'invention est illustrée par les figures suivantes:

la figure 1 représente au grossissement 400 la microstructure d'un lingotin d'alliage 5086 exempt de Be;

la figure 2 représente la microstructure d'un même alliage contenant 100 ppm de Be;

la figure 3 représente la microstructure d'un même alliage contenant 1070 ppm de Be et par l'exemple suivant:

*Exemple :*

On a coulé sous forme de lingotins, avec une vitesse de solidification représentative de la coulée semi-continue des plaques de 300 mm d'épaisseur, les compositions suivantes (% en poids sauf indications contraires):

| | Fe | Si | Cu | Mn | Ti | Mg | Cr | Be (ppm) |
|---|---|---|---|---|---|---|---|---|
| A | 0,21 | 0,19 | <0,01 | 0,31 | <0,002 | 3,5 | 0,06 | — |
| B | 0,21 | 0,19 | <0,01 | 0,31 | <0,002 | 3,5 | 0,06 | 100 |
| C | 0,21 | 0,19 | <0,01 | 0,31 | <0,002 | 3,5 | 0,06 | 560 |
| D | 0,21 | 0,19 | <0,01 | 0,31 | <0,002 | 3,5 | 0,06 | 1070 |

Ces lingotins ont été homogénéisés à 430°C, 6 h (montée en 4 h) + 6 h à 510°C, trempés à l'eau et examinés en microscopie optique au grossissement 400.

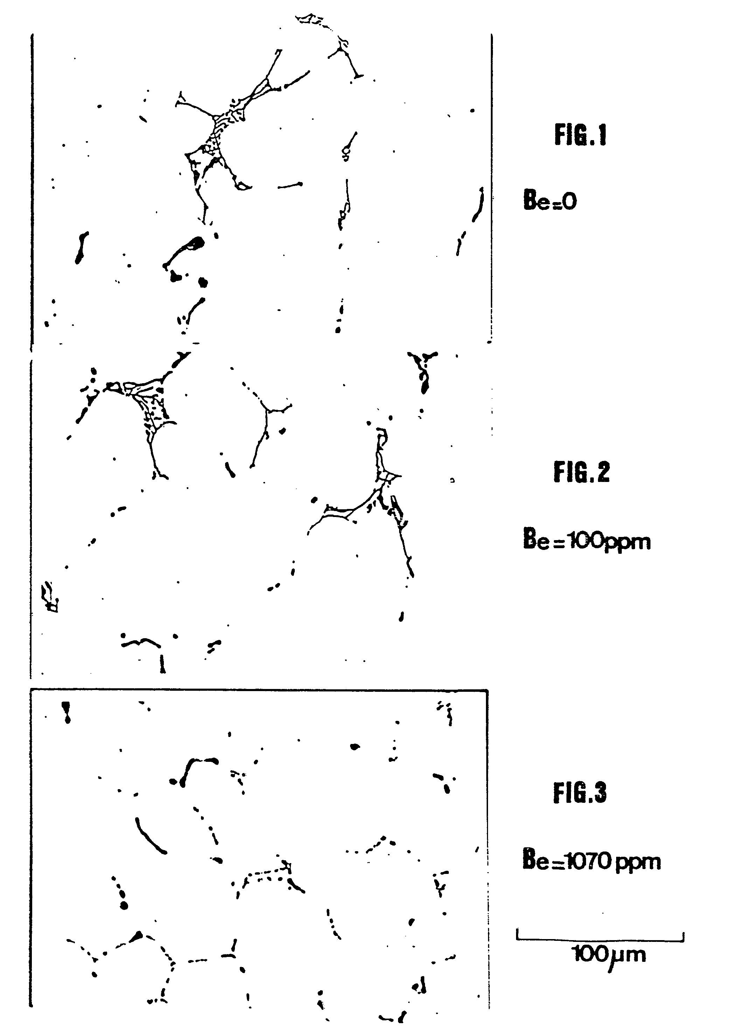

Les micrographies sont reportées aux figures 1 à 3.

Les figures 1 et 2, représentatives de la coulée témoin A et de la coulée B (Be 100 ppm), présentent des phases (Al, Mn, Si, Fe) de type eutectique (en écriture chinoise) néfastes pour l'utilisation envisagée. Par contre, la figure 3, représentant la microstructure de la coulée D (Be = 1070 ppm) présente des phases (Al, Mn, Si, Fe) fines de l'ordre de 2,8 µm, non défavorables à l'emploi envisagé. L'addition de Be intermédiaire (560 ppm) conduit à une structure voisine de celle observée sur la coulée D.

## Revendication

Substrat pour disques d'ordinateurs en alliage à base d'Al des séries 5000 ou 6000 suivant la nomenclature de l'Aluminium Association, caractérisé en ce qu'il contient de 150 à 2000 ppm de Be.

## Patentanspruch

Substrat für Speicherplatten aus einer Legierung auf Aluminiumbasis der Gruppen 5000 oder 6000 nach dem Bezeichnungssystem der Aluminium-Association, dadurch gekennzeichnet, dass sie 150 bis 2000 ppm Be enthält.

## Claim

A substrate for computer discs of alloy based on Al of the series 5000 or 6000 using the Aluminium Association nomenclature, characterised in that it contains from 150 to 2000 ppm of Be.

0 196 985

FIG.1

Be=0

FIG.2

Be=100ppm

FIG.3

Be=1070 ppm

100μm

3